# EUROPÄISCHE PATENTANMELDUNG

(11) **EP 2 226 616 A1**
(43) Veröffentlichungstag der Anmeldung: **08.09.2010**
(21) Anmeldenummer: 09003271.5
(22) Anmeldetag: 06.03.2009
(51) Int. Cl.: G01F 23/296

(54) **Verfahren und Vorrichtung zum Bestimmen einer Schichtdicke**

(71) Anmelder: Kessel GmbH, 85101 Lenting (DE)
(72) Erfinder: Kessel, Bernhard, 85101 Lenting (DE)
(74) Vertreter: Grünecker, Kinkeldey, Stockmair & Schwanhäusser Anwaltssozietät

(57) **Zusammenfassung**

Bei einem Verfahren zum Bestimmen der Dicke einer in einer Flüssigkeit schwimmenden Schicht mit einer bekannten Dichte wird die Eintauchtiefe der Schicht in die Flüssigkeit durch Messen des Ist-Niveaus des Flüssigkeitsspiegels und Vergleichen des Ist-Niveaus mit einem bei Abwesenheit einer Schicht bekannten Soll-Niveau ermittelt und aus der Eintauchtiefe mittels eines mit der Dichte der Schicht korrelierten Faktors die Dicke der Schicht errechnet. Eine Vorrichtung zum Bestimmen der Dicke der Schicht weist wenigstens ein von unten durch die Flüssigkeit auf die Schicht gerichtetes elektroakustisches Messgerät auf, das messwertübertragend mit einer Auswerte-Einrichtung verbunden ist, die eine Programmsektion für den Faktor und das Soll-Niveau, eine Niveau-Vergleichersektion und eine Schichtdicken-Rechensektion aufweist.

## Beschreibung

Die Erfindung betrifft ein Verfahren gemäß Oberbegriff des Patentanspruchs 1 sowie eine Vorrichtung gemäß Oberbegriff des Patentanspruchs 8.

Bei Fettabscheidern oder klärtechnischen Anlagen wird bisher die Dicke der oben in der Flüssigkeit schwimmenden Schicht mit in die Schicht eingesetzten, beheizten Sensoren elektronisch ermittelt, die z. B. das Stromdurchgangsverhalten oder Widerstandsverhalten in der Schicht messen. Da die Schicht Bewegungen ausführt und zum Teil sehr hart wird, oder harte Einschlüsse enthalten kann, werden entweder auf die in der Schicht eingebetteten Sensoren erhebliche Kräfte ausgeübt, oder aber es bilden sich störende Verkrustungen an den Sensoren. Falls die Sensoren nicht häufig gewartet oder kalibriert werden, können die Messwerte ungenau werden.

Bei einem aus DE 10 2004 036 645 A bekannten Niveau-Messverfahren wird das Ist-Niveau eines Flüssigkeitsspiegels mittels eines an einem Tauchrohr in der Flüssigkeit angeordneten Ultraschallwandlers gemessen, dem zur Selbstkalibrierung ein Referenzreflektor zugeordnet ist. Selbst wenn auf der Flüssigkeit eine Schaumschicht schwimmen sollte, wird nur das Ist-Niveau der Grenzschicht zwischen der Flüssigkeit und der Schaumschicht abgegriffen. Schwimmt auf der Flüssigkeit eine zweite Schicht einer Flüssigkeit mit geringerer Dichte, dann kann die Dicke dieser zweiten Schicht dadurch ermittelt werden, dass jeweils von der Grenzschicht zwischen den Flüssigkeiten reflektierte Ultraschallsignale und von der Oberfläche der oben schwimmenden Flüssigkeit reflektierte Ultraschallsignale ausgewertet werden. Die für diesen Zweck eingesetzte Vorrichtung misst jeweils den linearen vertikalen Abstand von der Stelle, an der der Ultraschallsensor platziert ist, zum Ist-Niveau des Flüssigkeitsspiegels bzw. zum Ist-Niveau des Flüssigkeitsspiegels der zweiten Flüssigkeit. Bei einer Ausführungsform der Vorrichtung schwimmt der Ultraschallsensor in einem Tauchrohr in der Flüssigkeit und wird der Abstand zum Boden der Kammer gemessen, in der die Flüssigkeit enthalten ist.

Bei dem aus DE 100 15 217 A bekannten Verfahren wird der Füllstand in einem Kraftstofftank mittels eines im Boden des Kraftstofftanks angeordneten elektroakustischen Messwertaufnehmers ermittelt.

Bei dem DE 103 09 861 A bekannten Verfahren werden chemische und/oder physikalische Eigenschaften einer in einem Behälter enthaltenen Flüssigkeit bestimmt, indem von einem Ultraschall-Sender am Boden des Behälters Signale in der Flüssigkeit ausgesandt werden, die vom Flüssigkeitsspiegel und reflektierenden Flächen am Boden des Behälters zu einem am Boden angeordneten Empfänger gelangen. Aus den unterschiedlichen Empfangszeitpunkten der reflektierten Signale werden die Eigenschaften der Flüssigkeit bestimmt, und gegebenenfalls auch deren Temperatur.

Der Erfindung liegt die Aufgabe zugrunde, ein Verfahren und eine Vorrichtung zum Bestimmen der Dicke einer in einer Flüssigkeit schwimmenden Schicht anzugeben, die kostengünstig, betriebssicher und universell für vorwiegend in der Abwassertechnik, Klärtechnik oder Abscheidetechnik eingesetzte Anlagen brauchbar ist.

Die gestellte Aufgabe wird mit den Merkmalen des Patentanspruchs 1 und den Merkmalen des Patentanspruchs 8 gelöst.

Verfahrensgemäß wird ohne Eingreifen in die Schicht die Schichtdicke unter Nutzen des "Eisberg-Effekts" der eine bekannte Dichte aufweisenden, in der Flüssigkeit schwimmenden und eintauchenden Schicht anhand einer Messung des verdrängten Ist-Niveaus des Flüssigkeitsspiegels errechnet. Das Verfahren ermöglicht es, die Schichtdicke betriebssicher und genau mit geringem Energieeinsatz zu bestimmen, da die Dichte der Schicht zumindest weitgehend bekannt ist und somit die Eintauchtiefe der Schicht in die Flüssigkeit Aufschluss darüber gibt, wie weit sich die Schicht auch nach oben über das Ist-Niveau des Flüssigkeitsspiegels erstreckt. Die errechnete Schichtdicke korrespondiert somit mit der Summe aus der Eintauchtiefe und dem Maß, mit dem sich die Schicht nach oben über das Ist-Niveau erstreckt. Bewegungen der Schicht in der Flüssigkeit, erstarrte Schichtanteile oder feste Bestandteile in der Schicht beeinflussen die Bestimmung der Schichtdicke nicht. Beispielsweise ist es bekannt, dass eine Schicht einer bestimmten Dichte eine Dicke hat, die dem 1,1-Fachen der Eintauchtiefe entspricht, z.B. vorwiegend pflanzliches oder tierisches Fett. Dann braucht nach Ermittlung der Differenz zwischen dem Ist-Niveau und dem Soll-Niveau nur die Differenz in einer einfachen Rechenoperation mit 1,1 multipliziert zu werden. Es könnten alternativ als Tabelle unterschiedlichen Dichten zugeordnete Multiplikatoren abgelegt sein, um den jeweilig passenden Multiplikator dichteabhängig zur Multiplikation mit der Niveau-Differenz wählen zu können, oder bei gegebener Dichte gleich unterschiedlichen Niveau-Differenzen zugeordnete, abrufbare Dickenwerte. Die errechnete Schichtdicke liefert ferner eine präzise und sehr aussagefähige Information unabhängig davon, ob die Schicht lokal Bereiche unterschiedlicher Dichte aufweist, oder nicht, da aus der Eintauchtiefe ein sehr aussagefähiger Durchschnittswert der Schichtdicke errechnet wird. Die Information des Soll-Niveaus des Flüssigkeitsspiegels bei Abwesenheit einer Schicht ist bekannt, speziell in Anlagen der Abwassertechnik, der Klärtechnik, der Abscheidetechnik und der Recyclingtechnik, weil die Flüssigkeit zumindest zeitweise durchläuft, oder lässt sich ohnedies leicht vorab beschaffen. Die Differenz zwischen dem Ist-Niveau und dem Soll-Niveau entspricht der Eintauchtiefe der Schicht, die umso weiter eintaucht, desto dicker sie ist. Die errechnete Schichtdicke wird beispielsweise dazu verwendet, bei Erreichen eines Grenzwertes die Notwendigkeit eines Entsorgungszyklus anzuzeigen oder einen solchen zu veranlassen.

In der Vorrichtung arbeitet das elektroakustische Messgerät unbeeinflusst von der Konsistenz und Zusammensetzung der Flüssigkeit, der Aggressivität, dem elektrischen Verhalten und etwaigen Bewegungen der Schicht, sodass sich bei hoher Betriebssicherheit sehr präzise Informationen zur Schichtdicke ergeben, indem der Eisbergeffekt der Schicht in der Flüssigkeit zur Berechnung der Schichtdicke herangezogen wird (von der Dicke und der Dichte der Schicht abhängige Eintauchtiefe der auch über das Ist-Niveau der Flüssigkeit nach oben überstehenden Schicht). Die Information zum Soll-Niveau des Flüssigkeitsspiegels bei Abwesenheit einer Schicht ist dank des Ablaufs gegeben. Die Dichte der Schicht ist für den jeweiligen Einsatzfall zumindest weitestgehend bekannt, so dass aus diesen Informationen allein durch die Messung des variierenden Ist-Niveaus die jeweilige Schichtdicke sehr präzise bestimmt oder elektronisch zu errechnen ist oder elektrisch aus einer Tabelle zu entnehmen ist. Gegebenenfalls ist die Auswerte-Einrichtung mit einem Informationsgeber verknüpft, der den Zulauf der Flüssigkeit überwacht und somit ein Absinken des Ist-Niveaus gegenüber dem Soll-Niveau aufgrund der nicht wachsenden Schichtdicke sondern mangels Zulauf ohne Alarm ausschließen lässt.

Zweckmäßig wird verfahrensgemäß das Ist-Niveau des Flüssigkeitsspiegels von unten gegen die Schicht elektroakustisch, vorzugsweise mit Ultraschall, gemessen, z.B. aus der Zeitverschiebung zwischen ausgesandten und empfangenen Ultraschallsignalen.

Da bei Zulauf von Flüssigkeit der Flüssigkeitsspiegel gegebenenfalls merklich steigt, kann, zur Vermeidung von Messfehlern aufgrund solcher Bewegungen der Messwert des Ist-Niveaus in einem stationären Zustand des Flüssigkeitsspiegels für die Dickenberechnung beschafft werden, z. B. indem bei periodischer Messung der Messwert erst weitergegeben wird, wenn keine merklichen Variationen mehr auftreten.

Da durch Zustandsänderungen der Flüssigkeit die Messgenauigkeit beeinträchtigt oder verfälscht werden könnte, wird bei einer zweckmäßigen Verfahrensvariante entweder beim Messen des Ist-Niveaus oder periodisch eine Selbst-Kalibrierung auf die Ist-Schallgeschwindigkeit in der Flüssigkeit ausgeführt. Dadurch wird der Einfluss variierender Zusammensetzungen der Flüssigkeit, wie deren chemischer Zusammensetzung, deren Dichte, Konsistenz, Temperatur, Salzgehalt und dgl., die die Schallgeschwindigkeit variieren würden, für die Messung kompensiert. Dies kann durch eine Referenzmessung oder durch Berücksichtigen der Temperatur der Flüssigkeit vorgenommen werden.

Zweckmäßig wird die errechnete Schichtdicke verfahrensgemäß deutlich erkennbar angezeigt, oder zumindest wenigstens ein kritischer Dickengrenzwert oder ein Signal (optisch, numerisch, schriftlich oder akustisch). Bei Erreichen wenigstens eines vorbestimmten Werts der Schichtdicke kann ein Warnsignal generiert werden, das beispielsweise die Notwendigkeit eines Entsorgungszyklus anzeigt oder empfiehlt.

An sich ist die Dichte der Schicht zumindest weitestgehend bekannt. Da jedoch äußere Einflüsse die Dichte der Schicht variieren können, wird zweckmäßig verfahrensgemäß die Ist-Schichtdicke unabhängig kontrolliert und bei Abweichung der Ist-Schichtdicke von der errechneten Schichtdicke der für die Berechnung verwendete dichteabhängige Faktor entsprechend korrigiert. Dies kann z.B. nur periodisch durchgeführt werden, da Änderungen der Dichte im Regelfall nur langsam eintreten.

Zweckmäßig werden verfahrensgemäß die bei der Bestimmung der Schichtdicke gewonnenen Informationen, z. B. zumindest bezüglich des Ist-Niveaus und der Schichtdicke, aufgezeichnet und über die Zeit ausgewertet, um Betriebsparameter oder Betriebsparameter-Trends speziell in einer Anlage der Klärtechnik, Abscheidetechnik, Recyclingtechnik, Abwassertechnik zu ermitteln, wie beispielsweise Informationen zum Durchsatz, zur Auslastung, zu Störungen und dgl. Diese Informationen liefern Aussagen, wie und ob die Anlage den Betriebsanforderungen entspricht bzw. überdimensioniert oder unterdimensioniert ist, und ob gegebenenfalls Nachrüstungen, Umrüstungen oder dgl. zweckmäßig sind, und auch darüber, ob die Anlage zweckentfremdet benutzt wird, und dgl. Verfahrensgemäß können in diese Überwachung oder Aufzeichnung auch Informationen über den Zulauf der Flüssigkeit und/oder deren Ablauf einfließen.

In der Vorrichtung ist das Messgerät zweckmäßig ein Ultraschallsensor zum Aussenden und Empfangen von Ultraschallsignalen in der Flüssigkeit. Aus der Zeitdifferenz zwischen dem Aussenden eines Signals und dem Empfang eines reflektierten Signals lässt sich das Ist-Niveau präzise messen.

Um zu vermeiden, dass die Schallgeschwindigkeit in der Flüssigkeit beeinflussende Zusammensetzungsänderungen der Flüssigkeit die Messungen beeinträchtigen oder verfälschen, ist zweckmäßig in der Flüssigkeit mit vorbestimmtem Abstand vom Ultraschallsensor ein Selbstkalibrierungs-Referenzreflektor für Ultraschallsignale vorgesehen. Der Referenzreflektor kann in jeder Richtung zum Ultraschallsensor angeordnet sein, wird zweckmäßig aber in der Sende- und Empfangsrichtung der Ultraschallsignale zum Ist-Niveau platziert. Die Messung des Ist-Niveaus wird jeweils an das Messresultat des festen Abstandes zum Referenzreflektor angepasst. Alternativ könnte, z. B. aus Kostengründen, ein Temperatursensor die Flüssigkeitstemperatur melden, die dann zur Kalibrierung nutzbar ist.

Zweckmäßig ist eine Flüssigkeitszustandsprüfsektion vorgesehen. Bei Zulauf von Flüssigkeit zur Kammer steigt gegebenenfalls das Ist-Niveau, um dann mit Verzögerung durch Ablauf wieder zu fallen. Diese Bewegungen haben nicht mit der Schichtdicke zu tun, und könnten zu Messfehlern führen. Die Zustandsprüfsektion wartet bei periodischen Messungen (z. B. jede Sekunde) eine längere Zeitspanne ab, bis die Messwerte zu variieren aufgehört haben, und gibt erst dann den Messwert zur Berechnung der Schichtdicke frei, oder lässt erst dann eine Messung zu. Die Zeitspanne wird je nach Einsatzbedingungen individuell festgelegt.

Der Ultraschallsensor ist, um präzise Messungen zu ermöglichen, zweckmäßig im Inneren der Kammer und im Abstand unterhalb des Soll-Niveaus angeordnet, vorzugsweise jedoch oberhalb eines Schlammsammelbereiches der Kammer, falls ein solcher vorgesehen ist. Dabei kann der Ultraschallsensor im oder unterhalb des Bodens der Kammer angeordnet sein, und dann durch den Boden senden und empfangen. Die gegenüber der in der Flüssigkeit unterschiedliche Schallgeschwindigkeit im Material des Bodens wird einfach auf rechnerischem Weg kompensiert, da sie im Wesentlichen unverändert bleibt. Der Ultraschallsensor kann auch in einer Seitenwand der Kammer platziert sein, beispielsweise in einer Einbuchtung, in der er durch das Material der Kammerwand sendet und empfängt, oder z.B. seitlich durch die Kammerwand in die Flüssigkeit eingebracht sein.

Die Auswerte-Einrichtung befindet sich zweckmäßig außerhalb der Kammer, vorzugsweise sogar in einer Überwachungsstation der Anlage, und weist eine Eingabe und/oder Korrektursektion zumindest für den Faktor, und gegebenenfalls auch für das Soll-Niveau, auf, sowie eine Anzeigevorrichtung, wie ein Display, zum Darstellen zumindest der errechneten Schichtdicke.

Um Abweichungen der zunächst als bekannt vorausgesetzten Dichte der Schicht feststellen und den für die Berechnung verwendeten Faktor entsprechend korrigieren zu können, ist zweckmäßig in der Kammer ein Sichtfenster, vorzugsweise mit einer Dickenmessskala, zur visuellen Kontrolle der Ist-Schichtdicke vorgesehen. Sobald sich eine Abweichung zwischen der Ist-Schichtdicke bei einer visuellen Kontrolle und der errechneten Schichtdicke feststellen lässt, die beispielsweise einen vorbestimmten Toleranzbereich überschreitet, wird der für die Berechnung verwendete Faktor entsprechend korrigiert, z.B. bis die gemessene Schichtdicke bei einer späteren Kontrolle mit der Ist-Schichtdicke weitestgehend übereinstimmt.

Zweckmäßigerweise ist die mit der Vorrichtung ausgestattete Kammer Teil einer Anlage der Abwassertechnik, der Klärtechnik, der Abscheidetechnik oder der Grauwasser-Recyclingtechnik. In solchen Anlagen läuft die Flüssigkeit als Abwasser beladen mit die Schicht bildenden Substanzen durch, und muss die Schichtdicke überwacht werden, um die Schicht bei Erreichen eines Grenzwertes aus der Kammer zu entsorgen.

Besonders zweckmäßig wird in solchen Anlagen die Auswerte-Einrichtung der Vorrichtung mit einer Zeitmess- und/oder Aufzeichnungsvorrichtung verknüpft, um aus den primär zur Bestimmung der Schichtdicke beschafften Informationen sekundär Betriebsparameter und/oder Betriebsparameter-Trends der Anlage zu ermitteln. Das Anwachsen der Schichtdicke über die Zeit gibt beispielsweise Aufschluss darüber, ob die Anlage ordnungsgemäß betrieben wird und den Anforderungen entsprechend ausgelegt oder über- bzw. unterdimensioniert ist, ferner lassen sich der Durchlauf oder Durchsatz und damit die Auslastung ermitteln, und die Häufigkeit oder Dauer von Auslastungsspitzen oder Störungen oder Störungsarten, und kann sogar eine Zweckentfremdung der Anlage festgestellt werden, die beispielsweise für den Hersteller der Anlage eine Rechtfertigung gegenüber dem Betreiber der Anlage ermöglicht, und dgl. Wenn die Auswerte-Einrichtung auch Informationen zum Flüssigkeitszulauf und/oder -ablauf erhält und speichert, können irrtümliche Schichtdicken-Warnungen nur aufgrund ausbleibenden Zulaufs vermieden werden, und lassen sich aussagefähige Daten zum zeitlichen Auftreten von Minderauslastungen oder Überlastungen der Anlage ermitteln, die sich betreiberseitig entsprechend berücksichtigen lassen, und dgl. Anhand der Zeichnungen werden Ausführungsformen des Erfindungsgegenstandes erläutert. Es zeigt:

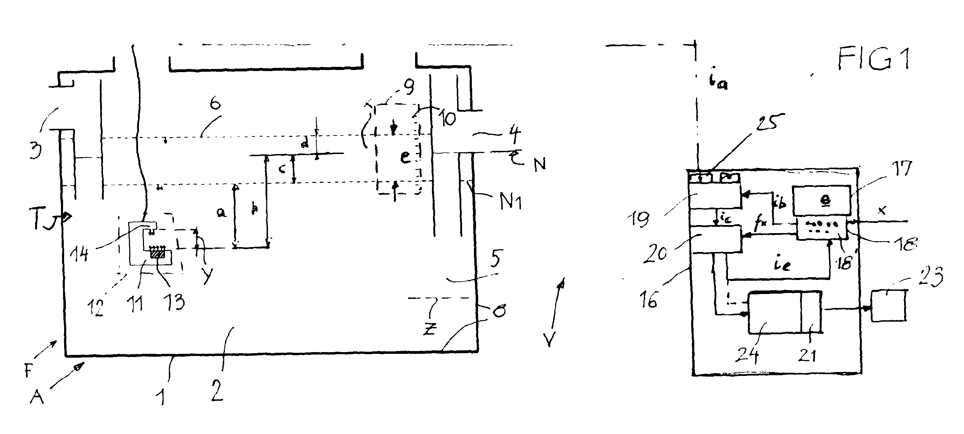

- Fig. 1: schematisch eine Anlage beispielsweise der Abwassertechnik, der Klärtech nik, der Recyclingtechnik oder der Abscheidetechnik mit einer Vorrichtung zum Messen der Dicke einer in der Flüssigkeit schwimmenden Schicht.

Fig. 1 zeigt schematisch einen eine Kammer 2 begrenzenden Behälter 1 einer Anlage A der Abwassertechnik, der Klärtechnik, der Grau- oder Schwarzwasser-Recyclingtechnik oder der Abscheidetechnik, im konkreten Fall eines Fettabscheiders F. Solche Fettabscheider F werden beispielsweise von lebensmittelverarbeitenden Betrieben, wie Restaurants, Fleischereien, Kantinen oder dgl. eingesetzt, um aus dem mit verschiedensten Stoffen beladenen Abwasser diejenigen Substanzen abzuscheiden, die nicht in das weiterführende Kanalsystem gelangen dürfen. Die Anlage A kann mehrere gleichartige oder verschiedene Kammern aufweisen, in denen aufeinanderfolgend unterschiedliche Behandlungsschritte ablaufen. Der gezeigte Behälter 1 weist einen Zulauf 3 und einen ein Soll-Niveau N einer Flüssigkeit 5 definierenden Ablauf 4 auf. In der Kammer 2 werden aus der Flüssigkeit 5 eine geringere Dichte aufweisende Stoffe in einer Schicht 6 abgeschieden, die in der Flüssigkeit 5 schwimmt. Am Grund des Behälters 1 kann gegebenenfalls ein Schlammsammelbereich Z vorgesehen sein. Die Kammer 2 wird von Boden- und Seitenwänden 8 begrenzt. In beispielsweise einer Seitenwand ist ein Sichtfenster 9, gegebenenfalls mit einer Skalierung 10, vorgesehen, um die Ist-Dicke der Schicht 6 optisch kontrollieren und feststellen zu können. Ferner ist dem Behälter 1 bzw. der Kammer 2 eine Vorrichtung zur Bestimmung der Dicke e der Schicht 6 funktionell zugeordnet, beispielsweise um die Dicke e anzuzeigen oder bei Anwachsen der Dicke e ein Warnsignal zu liefern, das einen Entsorgungszyklus für die Schicht 6 anzeigt, die dann entweder aufgebrochen und abgesaugt, oder in eine andere, nicht gezeigte Kammer verlagert wird.

Die Vorrichtung V weist einen elektrisch betriebenen Ultraschallsensor 11 auf, der entweder in der Flüssigkeit 5, beispielsweise unterhalb des Soll-Niveaus N und, falls vorhanden, oberhalb des Schlammsammelbereiches Z angeordnet ist. Der Ultraschallsensor 11 kann beispielsweise an einer vorbestimmten Stelle in die Flüssigkeit gehängt sein, oder durch eine Seitenwand eingeführt und positioniert sein, oder sogar von außen in einer Einbuchtung 12 in der Seitenwand platziert sein, derart, dass er durch die Seitenwand von unten in der Flüssigkeit gegen die Schicht 6 arbeitet. Als weitere Alternative könnte der Ultraschallsensor 11 auch in der Bodenwand oder unterhalb der Bodenwand angeordnet sein.

Der Ultraschallsensor 11 weist einen Ultraschallsignale aussendenden und empfangenden Sensorteil 13 auf, dem, beispielsweise in den Ultraschallsensor 11 integriert, ein Selbstkalibrierungs-Reflektor 14 in einem vorbestimmten Abstand y zugeordnet ist. Da der Selbstkalibrierungs-Ultraschallsignal-Reflektor 14 in dem vorbestimmten festen Abstand y vom Sensorteil 13 positioniert ist, hat der Ultraschallsensor 11 jederzeit eine Information zur tatsächlichen Schallgeschwindigkeit in der Flüssigkeit 5. Die Schallgeschwindigkeit ändert sich nämlich mit der Zusammensetzung der Flüssigkeit. Als Alternative ist ein Temperatursensor T angedeutet, der zur Selbstkalibrierung die Flüssigkeitstemperatur meldet, weil sich die Schallgeschwindigkeit in der Flüssigkeit mit der Temperatur ändert.

Der Sensorteil 13 sendet beispielsweise Ultraschallsignale nach oben gegen die Schicht 6, die am Ist-Niveau N₁ oder der Grenzschicht zwischen der Flüssigkeit 5 und der Unterseite der Schicht 6 reflektiert werden. Aus dem Zeitverzug zwischen dem Aussenden eines Ultraschallsignals und dem Empfang des Ultraschallsignals wird der Abstand a zum Ist-Niveau N₁ ermittelt und als Signal iₐ an eine Auswerteeinheit 16 übermittelt, die außerhalb des Behälters 1, beispielsweise in einer Überwachungsstation, angeordnet ist.

Die Dichte X der Schicht 6 ist bekannt oder zumindest weitgehend bekannt und liegt bei Pflanzenfetten zwischen etwa 0,90 und 0,93, bei tierischen Fetten zwischen etwa 0,92 und 0,95 und bei Ölen bei etwa 0,83. Aufgrund der Dichte X der Schicht 6 taucht diese abhängig von der Dicke e ein bestimmtes Maß c in die Flüssigkeit 5 ein. Die Dichte von Abwasser ist ebenfalls weitgehend bekannt. Die Dicke e der Schicht 6 beispielsweise bei pflanzlichen Fetten beträgt etwa das 1,1-Fache der Eintauchtiefe c in Abwasser, d.h., dass ein Dickenanteil d der Schicht 6 über den Flüssigkeitsspiegel (Ist-Niveau N₁) nach oben ragt.

Verfahrensgemäß wird die Dicke e somit dadurch bestimmt, dass zunächst das Maß a zum Ist-Niveau N₁ mittels des Ultraschallsensors 11 gemessen und dann vom Maß b entsprechend dem Soll-Niveau N definiert durch den Ablauf 4 subtrahiert wird, um die Eintauchtiefe c zu bestimmen. Die Eintauchtiefe c wird dann bei dem oben erläuterten Beispiel mit dem Faktor 1,1 multipliziert, um die Dicke e zu berechnen.

Die Auswerteeinheit 16 enthält beispielsweise eine Programmiereingabe- und/oder Korrektursektion 18, beispielsweise mit einer Tastatur 18' und eine Anzeige 17 für beispielsweise die Dicke e. Die Anzeige 17 kann beispielsweise ein Display sein. Ferner ist eine Niveau-Vergleichersektion 19 vorgesehen, die aus dem Signal iₐ zum Ist-Niveau N₁ und einem Signal i_{b} zum Soll-Niveau N die Eintauchtiefe c ermittelt und als Signal i_{c} an eine Rechensektion 20 liefert, die gleichzeitig einen Faktor fₓ korreliert mit der Dichte X erhält, und daraus die Dicke e errechnet und als Signal iₑ an die Anzeigesektion 18 liefert, die die Dicke e anzeigt, oder auch bei Erreichen einer kritischen Dicke e eine Warnanzeige oder ein Signal liefert. Der Vergleichersektion kann eine Flüssigkeitsspiegel-Zustands-Prüfsektion 25 zugeordnet sein, die z. B. den periodisch beschafften Messwert des Ist-Niveaus N₁ erst zur Berechnung der Dicke e freigibt oder beschaffen lässt, wenn nach einer Zeitspanne ein stationärer Zustand eingetreten ist. Die Zeitspanne und/oder auch grundsätzlich Messzeiten werden je nach Anwendungsfall festgelegt, z. B. für einen in der Nacht nicht gespeisten Fettabscheider nächtens oder sogar eine bestimmte Nachtzeit.

Es könnte auch eine Tabelle für unterschiedliche Dichten X abgelegt oder gespeichert sein, bestehend aus unterschiedlichen Faktoren fₓ für diese Dichten, die aus der jeweils eingegebenen Dichte X den passenden Faktor fₓ abruft und an die Rechensektion 20 liefert. Alternativ könnte eine Tabelle für unterschiedliche Eintauchtiefen c einer bestimmten Dichte X enthalten und den jeweils richtigen Faktor fₓ oder gleich die entsprechende Dicke e liefert.

Als Option ist mit der Auswerteeinheit 16 ferner eine Sektion 24 zum Aufzeichnen und Auswerten der bei der Bestimmung der Dicke e beschafften Informationen oder Veränderungen dieser Informationen vorgesehen, die mit einem Zeitglied 21 verknüpft sein kann, und die Entwicklung von Betriebsparametern oder Betriebsparameter-Trends auswertet und aufzeichnet und beispielsweise über ein Ausgabemedium 23, wie einen Drucker oder einen PC abrufbereit präsentiert. Die Betriebsparameter bzw. Betriebsparameter-Trends können dann ausgewertet werden, um beispielsweise Informationen zur Auslastung, zum Durchsatz, zu Störungen, zu Störungsarten, zu zweckentfremdeten Einsätzen und dgl. zu liefern, die sowohl für den Hersteller der Anlage A als auch den Betreiber nützlich sind. Beispielsweise kann ein Betreiber anhand solcher Betriebsparameter oder Betriebsparameter-Trends zu wiederkehrenden Zeiten auftretende Überauslastungen zukünftig vermeiden oder weitgehend mildern oder Betriebsstätten-Reinigungszyklen zeitlich so zu legen, dass sie sich nicht mit Spitzenauslastungen überlappen, oder dgl.

Erfindungsgemäß wird also das bekannte Eisberg-Phänomen einer in einer Flüssigkeit schwimmenden Schicht genutzt, um auf einfachem und betriebssicherem Weg und ohne in die Schicht eingreifen zu müssen, die Dicke e der Schicht 6 zu bestimmen. Mit dem EisbergEffekt ist gemeint, dass eine in einer Flüssigkeit schwimmende Schicht geringerer Dichte X als die Dichte der Flüssigkeit abhängig von der Dicke e eine bestimmte Eintauchtiefe hat, wobei ein Teil der Dicke über das Flüssigkeitsniveau nach oben übersteht. Die Eintauchtiefe wird durch Messen des durch die Verdrängung in der Kammer 2 entstehenden Ist-Niveaus N₁ und dem Vergleich mit dem durch den Ablauf 4 definierten Soll-Niveau N ermittelt. Mit der bekannten Dichte X der Schicht 6 und dem Verhältnis zwischen der Eintauchtiefe c und dem Dickenanteil d, der über das Soll-Niveau N nach oben ragt, liegt ein Faktor vor, mit dem die Eintauchtiefe zu multiplizieren ist, um die Dicke e zu berechnen.

In der Praxis kann dies beispielsweise so durchgeführt werden, dass an der Eingabe- und Anzeigesektion 18 bzw. der Tastatur 18' Tasten vorliegen, die beispielsweise mit Fleischerei, Restaurant, asiatisches Restaurant, und dgl. markiert sind und indirekt für die jeweils bekannte Dichte X entscheidend sind. Der Betreiber der Anlage A drückt die für ihn zutreffende Taste und erhält dann die Dicke e dargestellt, die für ihn maßgeblich ist.

Da bei Betreibern bestimmter Kategorien dennoch mehr Substanzen einer Art als Substanzen einer anderen Art verarbeitet werden können und die als bekannt vorausgesetzte Dichte X somit etwas variiert, ist es zweckmäßig, zumindest periodisch eine Sichtkontrolle der Ist-Dicke einer Schicht, z.B. anhand des Sichtfensters 9, vorzunehmen, um herauszufinden, ob die errechnete Dicke e mit der Ist-Dicke weitestgehend übereinstimmt. Sollten sich bei einem solchen Vergleich Abweichungen nach oben oder unten ergeben, dann ist die Eingabe- und Anzeigesektion 18 so ausgelegt, dass sich der jeweils für die Berechnung eingesetzte Faktor fₓ entsprechend nach oben oder unten korrigieren lässt.

Um den Komfort beim Betrieb der Anlage A auf der Seite des Betreibers zu steigern, könnte die Dicke e nur bei Bedarf angezeigt werden, und könnte hingegen bei Erreichen eines bestimmten ersten Grenzwertes der Dicke e ein akustisches oder optisches Signal generiert werden, das auf die Notwendigkeit eines baldigen Entsorgungszyklus hinweist, und dann bei weiterem Anwachsen der Dicke e ein deutliches und einen Entsorgungszyklus forderndes Signal. Die Anlage könnte weiterhin so ausgebildet sein, dass ein Entsorgungszyklus, z.B. durch Aufbrechen der Schicht 6 und Umpumpen in eine andere Kammer, automatisch durchgeführt wird anhand der Information zur Dicke e der Schicht 6. In der Anlage A könnten ferner nicht dargestellte Sensoren enthalten und an die Auswerteeinheit 16 informationsliefernd angeschlossen sein, die den Zulauf der Flüssigkeit und/oder den Ablauf und somit den Durchsatz registrieren und melden. Auch diese Informationen könnten bei der zeitlichen Auswertung auf Aufzeichnung berücksichtigt werden, um noch aussagefähigere Informationen oder Betriebsparameter bzw. Betriebsparameter-Trends für den Betreiber und/oder die Wartungsfirma der Anlage A bereitzustellen.

## Patentansprüche

1. Verfahren zum Bestimmen der Dicke (e) einer in einer Flüssigkeit (5) schwimmenden Schicht (6) mit einer zumindest weitgehend bekannten Dichte (X), **dadurch gekennzeichnet, dass** durch Messen des Ist-Niveaus (N₁) des Flüssigkeitsspiegels und Vergleichen des Messwerts des Ist-Niveaus mit einem bei Abwesenheit einer Schicht (6) bekannten Soll-Niveau (N) die Eintauchtiefe (c) der Schicht (6) in die Flüssigkeit (5) ermittelt und aus der Eintauchtiefe (c) mittels eines mit der Dichte (X) der Schicht (6) korrelierten Faktors (fₓ) die Dicke (e) der Schicht (6) errechnet wird.

2. Verfahren nach Anspruch 1, **dadurch gekennzeichnet, dass** zumindest das Ist-Niveau (N₁) des Spiegels oder der Grenzschicht zwischen der Flüssigkeit (5) und der Schicht (6) Flüssigkeit (6) mit Ultraschall von unten in der Flüssigkeit gegen die Schicht gemessen wird.

3. Verfahren nach Anspruch 1, **dadurch gekennzeichnet, dass** zum Errechnen der Dicke (e) der Messwert des Ist-Niveaus (N1) in einem stationären Zustand der Flüssigkeit (5) bzw. des Flüssigkeitsspiegels beschafft wird.

4. Verfahren nach Anspruch 1, **dadurch gekennzeichnet, dass** entweder gleichzeitig mit der Messung des Ist-Niveaus (N₁) oder periodisch eine Selbstkalibrierung der Messung auf die Ist-Schallgeschwindigkeit in der Flüssigkeit (5) ausgeführt wird.

5. Verfahren nach Anspruch 1, **dadurch gekennzeichnet, dass** die errechnete Schichtdicke (e) angezeigt und/oder bei Erreichen wenigstens einer vorbestimmten Schichtdicke (e) ein Warnsignal generiert wird.

6. Verfahren nach wenigstens einem der vorhergehenden Ansprüche, **dadurch gekennzeichnet, dass** die Ist-Dicke der Schicht gesondert kontrolliert und bei einer Abweichung der Ist-Dicke der Schicht (6) von der errechneten Schichtdicke (e) der zur Berechnung verwendete Faktor (fₓ) entsprechend korrigiert wird.

7. Verfahren nach wenigstens einem der vorhergehenden Ansprüche, **dadurch gekennzeichnet, dass** in einer Anlage (A) der Abwassertechnik, Klärtechnik, Recyclingtechnik oder Abscheidetechnik Variationen der errechneten Schichtdicke (e) und/oder des Ist-Niveaus (N₁) der Flüssigkeit (5) über die Zeit aufgezeichnet und im Hinblick auf Betriebsparameter und/oder Betriebsparameter-Trends wie Auslastung und/oder Durchsatz und/oder Störfälle oder dgl. ausgewertet werden.

8. Vorrichtung (V) zum Bestimmen der Dicke (e) einer in einer Flüssigkeit (5) schwimmenden Schicht (6) mit einer zumindest weitgehend bekannten Dichte (X) in einer Kammer (2), die wenigstens einen ein Soll-Niveau (N) des Flüssigkeitsspiegels bei Abwesenheit einer Schicht definierenden Ablauf (4) aufweist, **dadurch gekennzeichnet, dass** wenigstens ein von unten durch die Flüssigkeit (5) gegen die Schicht (6) gerichtetes, elektroakustisches Messgerät (11) zum Messen des in der Kammer (2) gegebenen Ist-Niveaus (N₁) des Flüssigkeitsspiegels vorgesehen und messwertübertragend mit einer Auswerte-Einrichtung (16) verbunden ist, die eine Programm- oder Speichersektion (18) zumindest für einen mit der Dichte (X) der Schicht (6) korrelierten Faktor (fₓ) und das Soll-Niveau (N), eine Niveau-Vergleichersektion (19), und eine Schichtdicken-Rechensektion (20) aufweist.

9. Vorrichtung nach Anspruch 8, **dadurch gekennzeichnet, dass** die Auswerte-Einrichtung (16) eine Flüssigkeitsspiegel-Zustands-Prüfsektion (25) aufweist oder mit einer solchen verbunden ist.

10. Vorrichtung nach Anspruch 8, **dadurch gekennzeichnet, dass** das Messgerät (11) einen Ultraschallsensor (13) zum Aussenden und Empfangen von Ultraschallsignalen aufweist.

11. Vorrichtung nach Anspruch 8, **dadurch gekennzeichnet, dass** dem Ultraschallsensor (13) in der Flüssigkeit (5) mit vorbestimmten Abstand (y) vom Ultraschallsensor (13) ein Selbstkalibrierungs-Referenzreflektor (14) für Ultraschallsignale zugeordnet ist.

12. Vorrichtung nach Anspruch 8, **dadurch gekennzeichnet, dass** zur Selbstkalibrierung dem Ultraschallsensor (13) oder der Auswerteeinrichtung (16) ein Flüssigkeits-Temperatursensor (T) zugeordnet ist.

13. Vorrichtung nach Anspruch 8, **dadurch gekennzeichnet, dass** der Ultraschallsensor (13) im Inneren der Kammer (2) im Abstand unterhalb des Soll-Niveaus (N) angeordnet ist, vorzugsweise oberhalb eines Schlammsammelbereichs (Z) der Kammer (2) oder im oder unterhalb des Bodens oder in einer Seitenwand (8), vorzugsweise in einer Einbuchtung (13), der Kammer (2).

14. Vorrichtung nach Anspruch 8, **dadurch gekennzeichnet, dass** die Auswerte-Einrichtung (16) außerhalb der Kammer (2), vorzugsweise in einer Überwachungsstation, angeordnet ist, und eine Eingabe- und/oder Korrektursektion (18') zumindest für den Faktor (fₓ) oder die Dichte (X), und, gegebenenfalls, für das Soll-Niveau (N) sowie eine Anzeigevorrichtung (17) wie ein Display zum Darstellen zumindest der errechneten Schichtdicke (e) aufweist.

15. Vorrichtung nach wenigstens einem der Ansprüche 8 bis 14, **dadurch gekennzeichnet, dass** die Kammer (2) ein Sichtfenster (9), vorzugsweise mit einer Skala (10), zur visuellen Kontrolle der Ist-Dicke der Schicht (6) aufweist.

16. Vorrichtung nach wenigstens einem der Ansprüche 8 bis 15, **dadurch gekennzeichnet, dass** die mit der Vorrichtung (V) ausgestattete Kammer (2) Teil einer abwasser- oder klärtechnischen Anlage (A), insbesondere einer Kläranlage, einer Kleinkläranlage, eines Fettabscheiders (F) oder eines Grauwasser-Recyclers ist.

17. Vorrichtung nach wenigstens einem der Ansprüche 8 bis 16, **dadurch gekennzeichnet, dass** die Auswerte-Einrichtung (16) zur Ermittlung von Betriebsparametern und/oder Betriebsparameter-Trends mit einer Zeitmess- und/oder Aufzeichnungsvorrichtung (21, 24, 23) verknüpft ist.
